(19) Europäisches Patentamt
European Patent Office
Office européen des brevets

(11) EP 3 217 687 A1

(12) EUROPEAN PATENT APPLICATION
published in accordance with Art. 153(4) EPC

(43) Date of publication:
13.09.2017 Bulletin 2017/37

(51) Int Cl.:
H04R 3/12 (2006.01)     H04R 1/40 (2006.01)
H04R 3/00 (2006.01)     B60R 11/02 (2006.01)

(21) Application number: 15858001.9

(22) Date of filing: 24.09.2015

(86) International application number:
PCT/JP2015/076828

(87) International publication number:
WO 2016/072164 (12.05.2016 Gazette 2016/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 05.11.2014 JP 2014225032

(71) Applicant: Hitachi Automotive Systems, Ltd.
Hitachinaka-shi, Ibaraki 312-8503 (JP)

(72) Inventors:
• KUDO, Makoto
  Hitachinaka-shi
  Ibaraki 312-8503 (JP)
• OSAFUNE, Tatsuaki
  Tokyo 100-8280 (JP)
• HORITA, Yuki
  Tokyo 100-8280 (JP)

(74) Representative: MERH-IP Matias Erny Reichl
Hoffmann
Patentanwälte PartG mbB
Paul-Heyse-Strasse 29
80336 München (DE)

(54) CAR ONBOARD SPEECH PROCESSING DEVICE

(57) The present invention provides a speech processing device with which it is possible to achieve smooth communication between the passengers of a host vehicle and the passengers of a desired vehicle. In a communication system according to the present invention, a first communication device 10 transmits the position of a first vehicle Mc, the speech of a speaker 601, and a direction d of utterance to multiple unspecified second vehicles Mr in the surroundings of the first vehicle Mc. A second communication device 10 processes the speech in a sound field formed inside the second vehicles Mr by a speaker array comprising a plurality of speakers 41 so that the virtual sound source of the speech is formed in the direction of the position of the first vehicle Mc, and outputs the processed speech using the speaker array at a sound volume calculated on the basis of the position of the first vehicle Mc, the positions of the second vehicles Mr, and the direction d of utterance of the speaker in the first vehicle Mc.

FIG. 1

## Description

Technical Field

The present invention relates to an in-vehicle voice processing device enabling, for example, communication between an occupant in one vehicle and an occupant in an intended vehicle.

Background Art

In recent years, there are vehicles equipped with an acoustic system using surround speakers (a speaker array) that realizes a realistic sound field. PTL 1 presents a technology where one vehicle (vehicle A) transmits its position and the voice of an utterer in the one vehicle, and an intended vehicle (vehicle B) calculates a positional relationship between vehicle B and vehicle A from the received position of vehicle A and the position of vehicle B and outputs the received voice from surround speakers so that its voice can be heard from the direction of vehicle A.

In the technology in PTL 1, the voice is transmitted to not only the intended vehicle an utterer in one vehicle wants to speak to but also many and unspecified vehicles around the one vehicle. Then, the volume of the voice is adjusted according to the distance from the one vehicle (the farther away a vehicle is from the one vehicle, the lower the volume of the voice).

Citation List

Patent Literature

PTL 1: JP 2009-023486 A

Summary of Invention

Technical Problem

However, of other vehicles around one vehicle, the intended vehicle an utterer in the one vehicle wants to speak to is not always a vehicle nearest to the one vehicle. Therefore, an occupant in the intended vehicle may be less likely to find him/herself spoken to, and there is concern that there may arise a situation in which it is difficult to perform smooth communication with the intended vehicle.

The present invention has been made in view of the above, and an object of the invention is to provide a voice processing device enabling smooth communication between an occupant in one vehicle and an occupant in an intended vehicle.

Solution to Problem

An in-vehicle voice processing device according to the present invention for solving the problem includes: a vehicle-position acquiring unit that acquires a position of a vehicle; a voice acquiring unit that acquires a voice of an utterer in the vehicle; an utterance-direction detecting unit that detects a direction of utterance of the utterer; and a transmitting unit that transmits the position of the vehicle, the voice, and the direction of utterance to many and unspecified other vehicles around the vehicle.

In addition, an in-vehicle voice processing device according to another aspect of the present invention includes: a vehicle-position acquiring unit that acquires a position of vehicle; a receiving unit that receives a position of another vehicle, a voice of an utterer in the other vehicle, and a direction of utterance of the utterer in the other vehicle that are transmitted from the other vehicle; and a voice output unit that calculates volume of the voice to be output on the basis of the position of the vehicle, the position of the other vehicle, and the direction of utterance of the utterer in the other vehicle, and processes the voice so that a virtual source of the voice is formed in a direction of the position of the other vehicle in a sound field formed by a speaker array composed of a plurality of speakers, and then outputs the voice at the volume from the speaker array.

Advantageous Effects of Invention

According to the present invention, smooth communication between vehicles is possible. Incidentally, the problems, configurations, and advantageous effects other than those described above are revealed in the following description of embodiments.

Brief Description of Drawings

[FIG. 1] FIG. 1 is a block diagram showing a configuration of an in-vehicle voice processing device in Example 1.
[FIG. 2] FIG. 2 is the interior layout of the in-vehicle voice processing device in Example 1.
[FIG. 3] FIG. 3 is a diagram showing a configuration of the data format of data transmitted and received by the in-vehicle voice processing device in Example 1.
[FIG. 4] FIG. 4 is a diagram showing the flow of data processing when data is transmitted by the in-vehicle voice processing device in Example 1.
[FIG. 5] FIG. 5 is a diagram showing the flow of data processing when data is received by the in-vehicle voice processing device in Example 1.
[FIG. 6] FIG. 6 is a diagram explaining the direction of utterance of an occupant in one vehicle and the direction and volume of the voice in an intended vehicle in Example 1.
[FIG. 7] FIG. 7 is a block diagram showing a configuration of an in-vehicle voice processing device in Example 2.
[FIG. 8] FIG. 8 is the interior layout of the in-vehicle voice processing device in Example 2.
[FIG. 9] FIG. 9 is a diagram explaining the direction of utterance of an occupant in one vehicle and the direction and volume of the voice in an intended vehicle in Example 2.
[FIG. 10] FIG. 10 is a block diagram showing a configuration of an in-vehicle voice processing device in Example 3.
[FIG. 11] FIG. 11 is a block diagram showing a configuration of an in-vehicle voice processing device in Example 3.

Description of Embodiments

The best mode for carrying out the present invention is described below with examples while referring to drawings.

<Example 1>

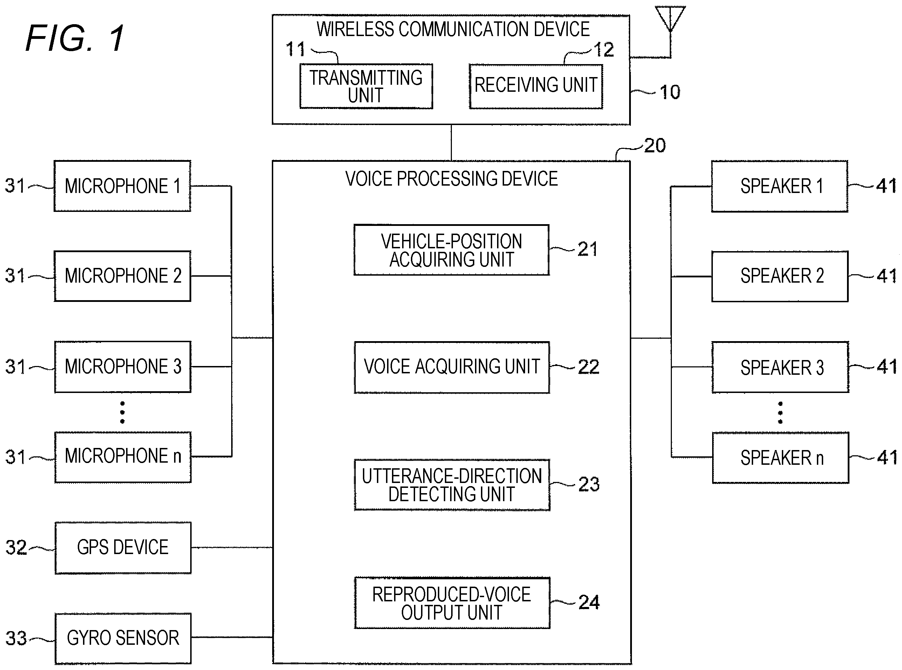

FIG. 1 is a block diagram showing a configuration of an in-vehicle voice processing device that is an embodiment of Example 1 of the present invention.

A communication system in the present invention is for performing wireless communication between at least two or more vehicles; in the present example, each vehicle is equipped with a wireless communication device 10. The wireless communication device 10 includes a transmitting unit 11 and a receiving unit 12, and enables one vehicle equipped with the wireless communication device 10 to communicate information including voice data with another vehicle equipped with the same wireless communication device. The transmitting unit 11 broadcasts information of the one vehicle so that many and unspecified other vehicles around the one vehicle can receive the information. The receiving unit 12 receives information of another vehicle transmitted from the other vehicle.

An in-vehicle voice processing device 20 is connected to the wireless communication device 10. Then, a plurality of microphones 31 composing a microphone array, a GPS device 32, and a gyro sensor 33 are connected to the input side of the in-vehicle voice processing device 20; a plurality of speakers 41 composing a speaker array are connected to the output side of the in-vehicle voice processing device 20.

The in-vehicle voice processing device 20 includes a vehicle-position acquiring unit 21 that acquires the position of the one vehicle, a voice acquiring unit 22 that acquires the voice of an utterer in the one vehicle, an utterance-direction detecting unit 23 that detects the direction of utterance of the utterer in the one vehicle, and a reproduced-voice output unit 24 that reproduces and outputs the utterer's voice in the other vehicle on the basis of information received from the other vehicle. The transmitting unit 11 of the wireless communication device 10 transmits information on the position of the one vehicle, the voice, and the direction of utterance.

The vehicle-position acquiring unit 21 acquires the position and orientation of the one vehicle on the basis of information from the GPS device 32 and information from the gyro sensor 33. The position of the one vehicle is represented by the latitude and longitude; the orientation of the one vehicle is represented by the azimuth direction (such as north, south, east, and west) based on the position of the one vehicle. The azimuth direction can also be represented by how many degrees, for example, from the north. As a method for detecting the orientation of the one vehicle, a geomagnetic sensor can be used instead of the gyro sensor 33. The voice acquiring unit 22 acquires the voice of an utterer in the one vehicle that has been input from the microphones 31. The voice acquiring unit 22 converts the voice from analog data to digital data. The utterance-direction detecting unit 23 detects the direction of utterance that is the direction the utterer is facing and speaking on the basis of the voice input from the microphones 31. The direction of utterance is represented by, for example, the azimuth direction based on a signal from the gyro sensor 33.

The reproduced-voice output unit 24 performs a process of calculating the volume at which reproduced voice is to be output in the one vehicle on the basis of the position of the one vehicle, the position of the other vehicle, and the direction of utterance of an utterer in the other vehicle, processing the voice so that the virtual source of the voice is formed in a direction of the position of the other vehicle in a sound field formed by the speaker array composed of the plurality of speakers, and outputting the voice at the calculated volume from the speaker array. Incidentally, as a method of processing the voice so that the virtual source of the voice is formed in a direction of the position of the other vehicle, the publicly-known technology presented in PTL 1 can be used.

The volume of reproduced voice output by the reproduced-voice output unit 24 is set so as to be highest when an utterer in the other vehicle is facing and speaking in the direction of the one vehicle, and is set so as to get lower as the direction of utterance of the utterer in the other vehicle gets farther away from the one vehicle.

The reproduced-voice output unit 24 changes the volume of reproduced voice according to the degree of coincidence between the direction of utterance in the other vehicle and the relative direction from the other vehicle to the one vehicle. The volume $V_1$ of reproduced voice is calculated by the following equation (1).

[Math. 1]

$$V_1 = \underbrace{V_0}_{\substack{\text{VOLUME OF}\\\text{UTTERANCE}}} \times m \cdot \underbrace{\frac{\vec{d} \cdot \vec{P_1}}{|\vec{d}| \cdot |\vec{P_1}|}}_{\substack{\text{TERM OF}\\\text{DIRECTION}\\\text{CALCULATION}}} \times \underbrace{\frac{k}{|\vec{P_1}|^2}}_{\substack{\text{TERM OF SOUND}\\\text{ATTENUATION}\\\text{IN DISTANCE}}} \quad \cdots \cdots (1)$$

$m, k$: CONSTANT

In the above equation (1), $V_0$ denotes the volume of the voice uttered by an utterer in the other vehicle (the volume of utterance); in the present example, it shows that the volume $V_1$ of reproduced voice in the one vehicle is proportional to the volume $V_0$ of utterance.

A term of direction calculation in the above equation (1) is a term that indicates the degree of coincidence between the direction of utterance that is the direction in which the utterer in the other vehicle is facing (vector d) and the relative direction from the other vehicle that is an utterance transmitting vehicle to the one vehicle that is an utterance receiving vehicle (vector $P_1$). In the present example, the term of direction calculation adopts a value obtained by dividing the inner product of the above two vectors by the magnitude of the two vectors; if the directions agree completely, this term is 1; if the directions differ by 90 degrees, this term is 0. Incidentally, if this value is negative, the term is set to 0. Therefore, the higher the degree of coincidence between the directions, the higher the volume $V_1$ of reproduced voice in the one vehicle. In the present example, there is described the case where the volume is gradually lowered as the degree of coincidence gets lower; alternatively, a predetermined angular range of less than 90 degrees is set, and the volume of reproduced voice can be held constant when the angle is within the predetermined angular range and be set to 0 if the angle deviates from the predetermined angular range.

A term of sound attenuation in distance in the above equation (1) is a term for calculating the attenuation of volume according to the distance $P_1$ from the other vehicle that is an utterance transmitting vehicle to the one vehicle that is an utterance receiving vehicle. In the present example, the value of this term is inversely proportional to the square of the distance from the other vehicle to the one vehicle; the farther the distance, the lower the volume $V_1$ of reproduced voice in the one vehicle.

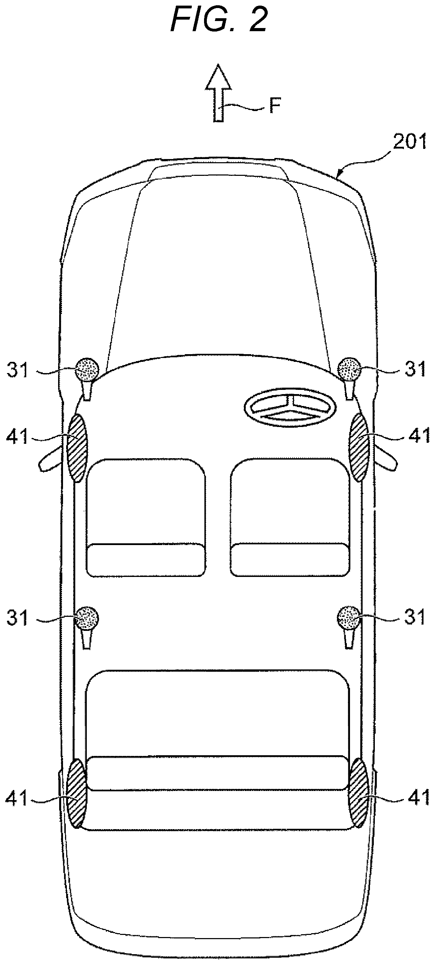

FIG. 2 is the interior layout of the in-vehicle voice processing device in Example 1. FIG. 2 schematically illustrates the interior of a vehicle 201. The plurality of microphones 31 and the plurality of speakers 41 are placed in the interior of the vehicle 201.

In the present example, four microphones 31 and four speakers 41 are placed so as to surround seats of the vehicle 201. The four microphones 31 acquire the voice so that which direction an utterer in the one vehicle is facing and speaking can be recognized. The four speakers 41 form a sound field in the interior of the one vehicle, and output reproduced voice so that the virtual source of the utterer's voice acquired in the other vehicle is formed in a direction of the position of the other vehicle, i.e., so that the utterer's voice in the other vehicle is heard from the direction of the other vehicle.

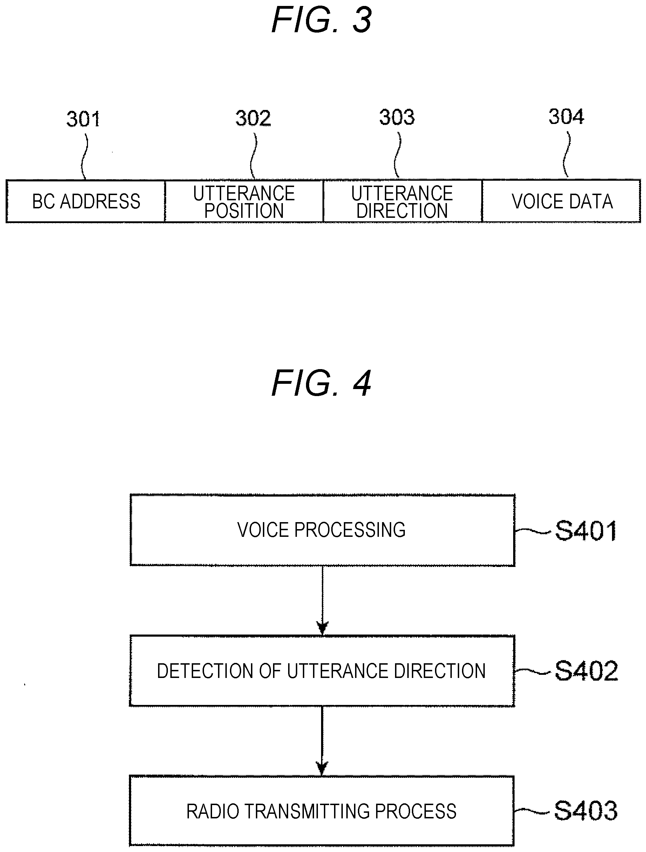

FIG. 3 is a diagram showing a configuration of the data format of data transmitted and received by the in-vehicle voice processing device that is the embodiment of Example 1 of the present invention.

The transmitting unit 11 of the in-vehicle voice processing device 20 transmits information of the one vehicle as packet data. The packet data has the packet format shown in FIG. 3, and includes information on a broadcast address (BC address) 301, the utterance position (the position of the one vehicle) 302, the utterance direction 303, and voice data 304.

FIG. 4 is a diagram showing the flow of data processing when data is transmitted by the in-vehicle voice processing device that is the embodiment of Example 1 of the present invention.

At step S401, the microphones 31 detect the voice of an utterer in the one vehicle, and a process of converting the detected voice into a format that the transmitting unit 11 can transmit is performed. Then, at step S402, a process of detecting the direction of utterance that is the direction in which the occupant is facing and speaking is performed. In the present example, the direction of utterance is detected on the basis of the voice detected by the microphones 31. At step S403, a process of transmitting information on the position and direction of utterance and the voice data through the transmitting unit 11 is performed. In the transmitting process, broadcasting to many and unspecified other vehicles existing within a predetermined range around the one vehicle is performed.

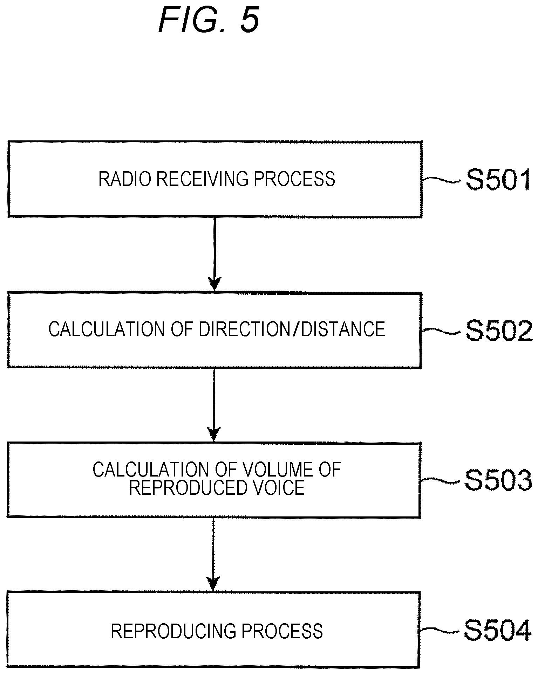

FIG. 5 is a diagram showing the flow of data processing when data is received by the in-vehicle voice processing device that is the embodiment of Example 1 of the present invention.

At step S501, a radio receiving process of receiving information of another vehicle broadcasted from the other vehicle is performed. Accordingly, the position of the other vehicle, the direction of utterance of an utterer in the other vehicle, and voice data of the utterer in the other vehicle are acquired. At step S502, a direction/distance calculating process of calculating the relative direction of utterance in the other vehicle to the one vehicle and the relative distance is performed. Then, at step S503, a process of calculating the volume of reproduced voice of the utterer in the other vehicle to be output from the speakers 41 on the basis of the relative direction of utterance of the utterer in the other vehicle to the one vehicle and the relative distance to the other vehicle that have been calculated at step S502 is performed. At step S504, a reproducing process of processing the voice so that the source of the utterer's voice in the other vehicle is formed a direction of the position of the other vehicle and outputting the voice from the speakers 41 at the volume calculated at step S503 is performed.

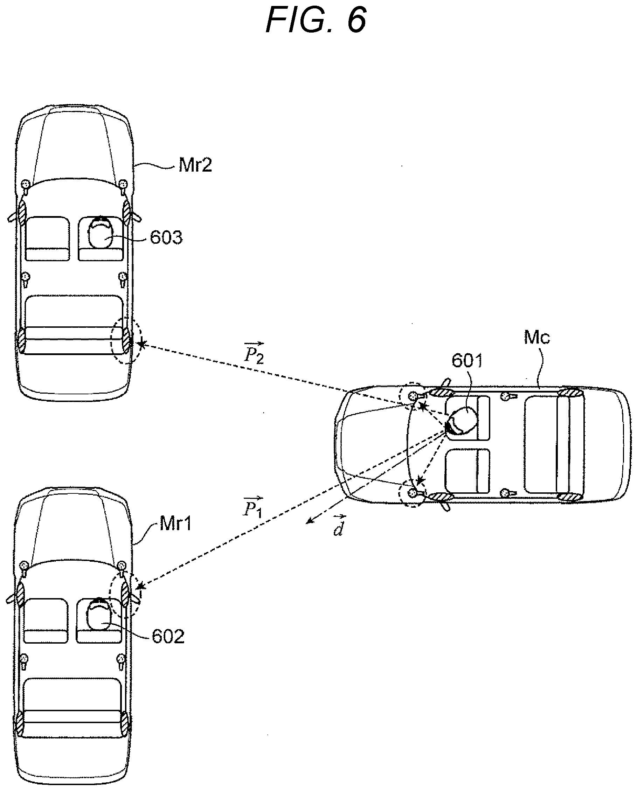

FIG. 6 is a diagram explaining the direction of utterance of an utterer in an utterance transmitting vehicle and the direction and volume of the voice in an utterance receiving vehicle in Example 1 of the present invention.

In an example shown in FIG. 6, three vehicles having the communication system in the present example are depicted. The three vehicles are all at a stop; in front of a transmitting vehicle Mc (a first vehicle), two receiving vehicles Mr1 and Mr2 (second vehicles) stand in the way of the transmitting vehicle Mc in such a manner that one receiving vehicle is behind the other one. The following receiving vehicle Mr1 is positioned farther away from the transmitting vehicle Mc than the leading receiving vehicle Mr2 is ($P_1 > P_2$). Then, an utterer 601, who is an occupant in the transmitting vehicle Mc, is speaking, for example, to an occupant in the following receiving vehicle Mr1 about letting the transmitting vehicle Mc pass between the following receiving vehicle Mr1 and the leading receiving vehicle Mr2, facing in a direction (d) of the following receiving vehicle Mr1.

In the conventional technology in PTL 1, the volume of the voice output in the leading receiving vehicle Mr2 nearer to the transmitting vehicle Mc is higher than that in the following receiving vehicle Mr1 farther away from the transmitting vehicle Mc. However, in this situation, the utterer in the transmitting vehicle Mc wants to speak to not an occupant in the leading receiving vehicle Mr2 but the occupant in the following receiving vehicle Mr1; therefore, there may be interference with smooth communication.

On the other hand, according to the communication system in the present example, respective volumes of reproduced voice in the receiving vehicles Mr1 and Mr2 are adjusted according to information on the direction of utterance of the utterer 601 in the transmitting vehicle Mc. Therefore, the volume of reproduced voice in the following receiving vehicle Mr1 located in the direction (d) of utterance of the utterer in the transmitting vehicle Mc is higher than that in the leading receiving vehicle Mr2. Therefore, an occupant 602 in the following receiving vehicle Mr1 can recognize that the utterer 601 in the transmitting vehicle Mc is speaking to the occupant 602 and becomes able to respond to the occupant 601 in the transmitting vehicle Mc, which makes it possible to have a you-are-there conversation between vehicles. Therefore, smooth communication can be performed as if it were communication between persons who are walking.

Then, an occupant 603 in the leading receiving vehicle Mr2 can hear the voice of the utterer 601 in the transmitting vehicle Mc from the direction of the transmitting vehicle Mc; however, its volume is lower than that in the following receiving vehicle Mr1, so the occupant 603 can recognize that the utterer 603 in the transmitting vehicle Mc is speaking to the occupant 602 in the following receiving vehicle Mr1.

<Example 2>

Subsequently, Example 2 of the present invention is described. Incidentally, the same component as Example 1 is assigned the same reference numeral, and its detailed description is omitted.

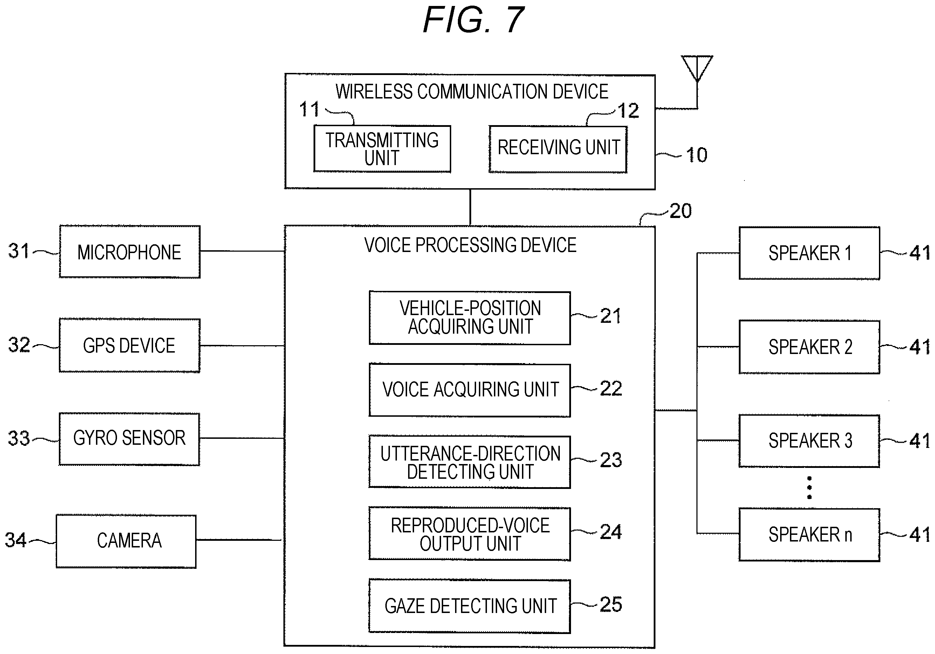

FIG. 7 is a block diagram showing a configuration of an in-vehicle voice processing device in Example 2; FIG.

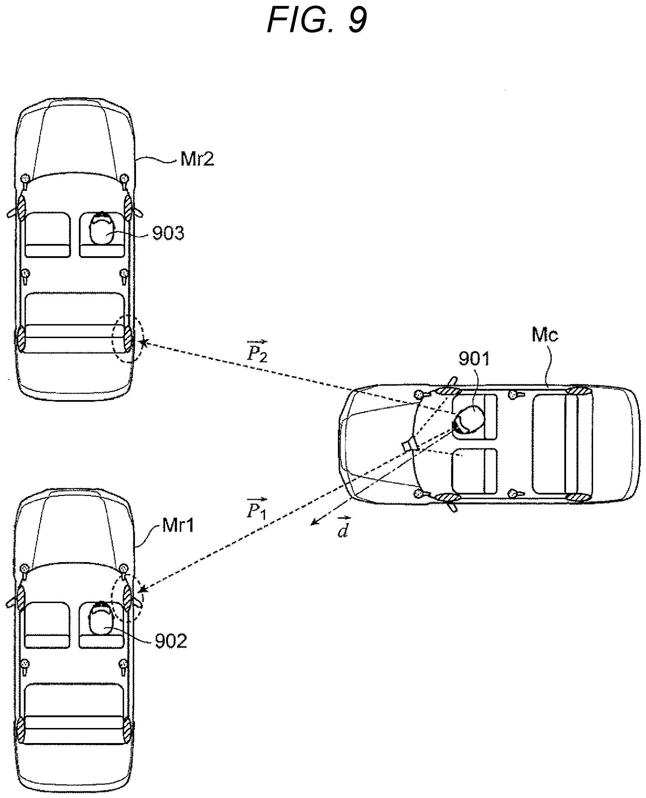

8 is the interior layout of the in-vehicle voice processing device in Example 2; FIG. 9 is a diagram explaining the direction of utterance of an occupant in one vehicle and the direction and volume of the voice in an intended vehicle in Example 2.

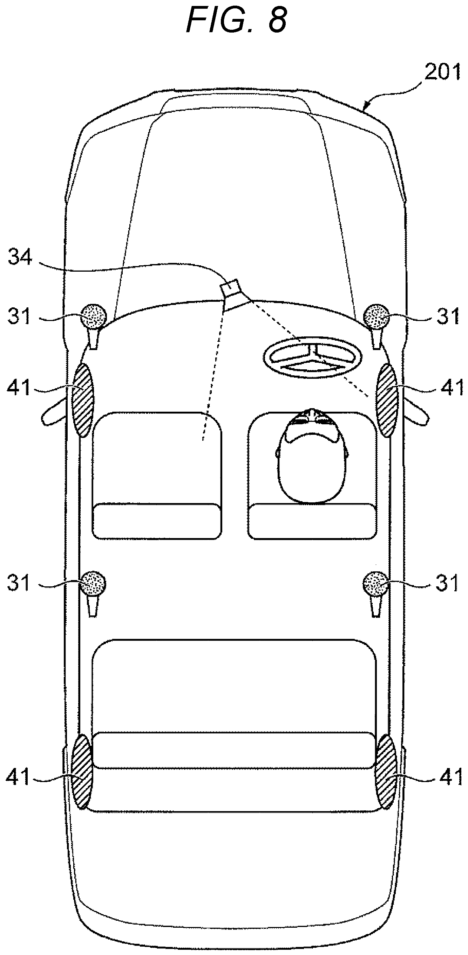

The characteristic of Example 2 is that it is configured to detect the direction of utterance of an utterer on the basis of the utterer's face image taken by a camera. As shown in FIG. 7, a camera 34 is connected to the in-vehicle voice processing device 20. Then, as shown in FIG. 8, the camera 34 is installed in front of a driver's seat so as to be able to take a face image of the driver that is an utterer.

The in-vehicle voice processing device 20 acquires the voice of an utterer and generates voice data, and also detects the utterer's gaze on the basis of the image taken by the camera 34, and detects the direction of utterance on the basis of the gaze. Then, the in-vehicle voice processing device 20 performs a process of generating vehicle information including the voice data, information on the direction of utterance, and information on the position of the vehicle, and transmitting the generated vehicle information from the transmitting unit 11.

As shown in FIG. 7, the in-vehicle voice processing device 20 includes the vehicle-position acquiring unit 21, the voice acquiring unit 22, the utterance-direction detecting unit 23, the reproduced-voice output unit 24, and a gaze detecting unit 25. The gaze detecting unit 25 detects utterer's gaze from an image taken by the camera 34. Then, the utterance-direction detecting unit 23 detects the direction of utterance of the utterer on the basis of the utterer's gaze detected by the gaze detecting unit 25. The direction of utterance is represented by, for example, the azimuth direction based on a signal from the gyro sensor 33.

Information on the direction of utterance is broadcasted together with respective pieces of information on the position of the vehicle, the direction of utterance, and voice data as packet data. The subsequent processes are the same as Example 1.

According to the present example, the direction of utterance of an utterer can be detected certainly, and the vehicle the utterer wants to speak to can be identified accurately. Therefore, a you-are-there conversation between vehicles can be made, and smoother communication than ever before is possible.

<Example 3>

Subsequently, Example 3 of the present invention is described. Incidentally, the same component as Example 1 or 2 is assigned the same reference numeral, and its detailed description is omitted.

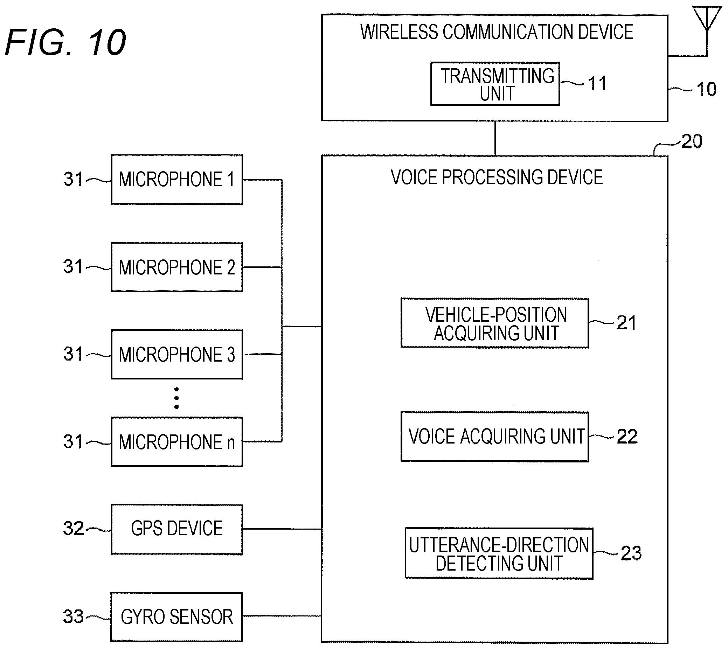

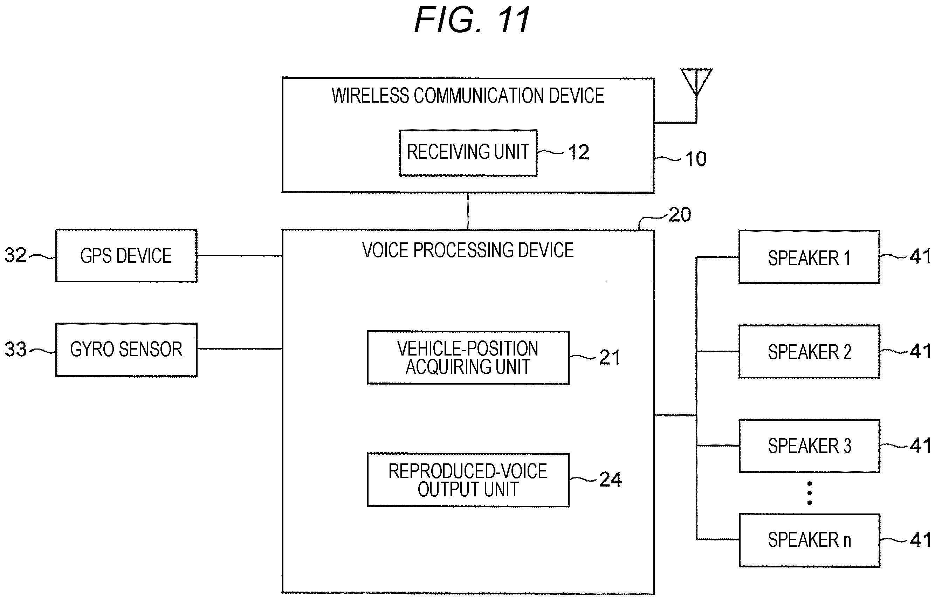

FIGs. 10 and 11 are block diagrams showing a configuration of an in-vehicle voice processing device in Example 3.

The characteristic of the present example is that it is configured to enable communication between a vehicle equipped with a wireless communication device 10 including the transmitting unit 11 only and a vehicle equipped with a wireless communication device 10 including the receiving unit 12 only.

In the above-described Examples 1 and 2, there is described an example where each vehicle is equipped with both the transmitting unit and the receiving unit, and it is possible to have a conversation between vehicles; however, the present invention can be also applied to between a vehicle including the transmitting unit only and a vehicle including the receiving unit only. For example, emergency vehicles such as ambulances are equipped with the transmitting unit only, and general vehicles are equipped with the receiving unit only, so an emergency vehicle can transmit the voice of an utterer in the emergency vehicle telling general vehicles on the route of the emergency vehicle to pull over to the side of a road as the emergency vehicle is about to pass. In response, occupants in general vehicles located in the direction of utterance can recognize that they are being spoken to from the volume of reproduced voice, and can pull over to the side of a road promptly.

A wireless communication device 10 shown in FIG. 10 (a first communication device) includes the transmitting unit 11 only. Then, an in-vehicle voice processing device 20 connected to this wireless communication device 10 includes the vehicle-position acquiring unit 21 (a first-vehicle-position acquiring unit), the voice acquiring unit 22, and the utterance-direction detecting unit 23. Therefore, a transmitting vehicle including the transmitting unit 11 can transmit the position of the transmitting vehicle, the voice of an utterer in the transmitting vehicle, and the direction of utterance of the utterer in the transmitting vehicle.

A wireless communication device 10 shown in FIG. 11 (a second communication device) includes the receiving unit 12 only. Then, an in-vehicle voice processing device 20 connected to this wireless communication device 10 includes the vehicle-position acquiring unit 21 (a second-vehicle-position acquiring unit) and the reproduced-voice output unit 24. Therefore, when a receiving vehicle including the receiving unit 12 has received the position of a transmitting vehicle, the voice of an utterer in the transmitting vehicle, and the direction of utterance of the utterer in the transmitting vehicle, the receiving vehicle can calculate the volume of reproduced voice to be output on the basis of the position of the receiving vehicle, the position of the transmitting vehicle, and the direction of utterance of the utterer in the transmitting vehicle, and process the voice so that the virtual source of the voice is formed in a direction of the position of the transmitting vehicle in a sound field formed by the speaker array composed of the plurality of speakers 41, and then output the voice at the calculated volume from the speaker array.

The embodiment of the present invention is described in detail above; however, the present invention is not limited to the above-described embodiment, and various design changes can be made without departing from the spirit of the invention described in claims. For example, the above embodiment is described in detail to explain the present invention clearly, and is not always limited to include all the described configurations. Furthermore, part of the configuration of one embodiment can be replaced with that of another embodiment, or the configuration of the other embodiment can be added to the configuration of the one embodiment. Moreover, part of the configuration of each embodiment can be subjected to addition/deletion/replacement with that of another embodiment.

Reference Signs List

| | |
|---|---|
| 10 | wireless communication device |
| 11 | transmitting unit |
| 12 | receiving unit |
| 20 | in-vehicle voice processing device |
| 21 | vehicle-position acquiring unit |
| 22 | voice acquiring unit |
| 23 | utterance-direction detecting unit |
| 24 | voice output unit |
| 25 | gaze detecting unit |
| 31 | microphone |
| 32 | GPS device |
| 33 | gyro sensor |
| 34 | camera |
| 41 | speaker |

**Claims**

1. An in-vehicle voice processing device comprising:

   a vehicle-position acquiring unit that acquires a position of a vehicle;
   a voice acquiring unit that acquires a voice of an utterer in the vehicle;
   an utterance-direction detecting unit that detects a direction of utterance of the utterer; and
   a transmitting unit that transmits the position of the vehicle, the voice, and the direction of utterance to many and unspecified other vehicles around the vehicle.

2. The in-vehicle voice processing device according to claim 1, wherein the utterance-direction detecting unit detects the direction of utterance on the basis of voices input from a plurality of microphones that are placed in interior of the vehicle and at different positions.

3. The in-vehicle voice processing device according to claim 1, wherein the utterance-direction detecting unit detects the direction of utterance on the basis of a face image of the utterer taken by a camera placed in interior of the vehicle.

4. An in-vehicle voice processing device comprising:

   a vehicle-position acquiring unit that acquires a position of vehicle;
   a receiving unit that receives a position of another vehicle, a voice of an utterer in the other vehicle, and a direction of utterance of the utterer in the other vehicle that are transmitted from the other vehicle; and
   a voice output unit that calculates volume of the voice to be output on the basis of the position of the vehicle, the position of the other vehicle, and the direction of utterance of the utterer in the other vehicle, and processes the voice so that a virtual source of the voice is formed in a direction of the position of the other vehicle in a sound field formed by a speaker array composed of a plurality of speakers, and then outputs the voice at the volume from the speaker array.

5. The in-vehicle voice processing device according to claim 4, wherein the voice output unit changes the volume of the voice according to a degree of coincidence between a relative direction from the other vehicle to the vehicle and the direction of utterance.

6. A communication system comprising:

a first communication device that a first vehicle is equipped with; and
a second communication device that a second vehicle is equipped with, wherein
the first communication device includes:

a first-vehicle-position acquiring unit that acquires a position of the first vehicle;
a voice acquiring unit that acquires a voice of an utterer in the first vehicle;
an utterance-direction detecting unit that detects a direction of utterance of the utterer in the first vehicle; and
a transmitting unit that transmits the position of the first vehicle, the voice of the utterer in the first vehicle, and the direction of utterance of the utterer in the first vehicle to many and unspecified second vehicles around the first vehicle, and

the second communication device includes:

a second-vehicle-position acquiring unit that acquires a position of the second vehicle;
a receiving unit that receives the position of the first vehicle, the voice of the utterer in the first vehicle, and the direction of utterance of the utterer in the first vehicle that are transmitted from the transmitting unit; and
a voice output unit that calculates volume of the voice to be output on the basis of the position of the first vehicle, the position of the second vehicle, and the direction of utterance of the utterer in the first vehicle, and processes the voice so that a virtual source of the voice is formed in a direction of the position of the first vehicle in a sound field formed in the second vehicle by a speaker array composed of a plurality of speakers, and then outputs the voice at the volume from the speaker array.

7. The communication system according to claim 6, wherein the voice output unit changes the volume of the voice according to a degree of coincidence between a relative direction from the first vehicle to the second vehicle and the direction of utterance.

*FIG. 1*

WIRELESS COMMUNICATION DEVICE

11 — TRANSMITTING UNIT
12 — RECEIVING UNIT
10

20 — VOICE PROCESSING DEVICE

31 — MICROPHONE 1
31 — MICROPHONE 2
31 — MICROPHONE 3
31 — MICROPHONE n

32 — GPS DEVICE
33 — GYRO SENSOR

21 — VEHICLE-POSITION ACQUIRING UNIT
22 — VOICE ACQUIRING UNIT
23 — UTTERANCE-DIRECTION DETECTING UNIT
24 — REPRODUCED-VOICE OUTPUT UNIT

41 — SPEAKER 1
41 — SPEAKER 2
41 — SPEAKER 3
41 — SPEAKER n

EP 3 217 687 A1

# FIG. 2

# FIG. 3

| 301 | 302 | 303 | 304 |
|-----|-----|-----|-----|
| BC ADDRESS | UTTERANCE POSITION | UTTERANCE DIRECTION | VOICE DATA |

# FIG. 4

```
┌─────────────────────────────────────┐
│         VOICE PROCESSING            │──── S401
└─────────────────────────────────────┘
                  │
                  ▼
┌─────────────────────────────────────┐
│  DETECTION OF UTTERANCE DIRECTION   │──── S402
└─────────────────────────────────────┘
                  │
                  ▼
┌─────────────────────────────────────┐
│      RADIO TRANSMITTING PROCESS     │──── S403
└─────────────────────────────────────┘
```

# FIG. 5

RADIO RECEIVING PROCESS — S501

CALCULATION OF DIRECTION/DISTANCE — S502

CALCULATION OF VOLUME OF REPRODUCED VOICE — S503

REPRODUCING PROCESS — S504

# FIG. 6

# FIG. 7

WIRELESS COMMUNICATION DEVICE

11 — TRANSMITTING UNIT

12 — RECEIVING UNIT

10

20 — VOICE PROCESSING DEVICE

31 — MICROPHONE

32 — GPS DEVICE

33 — GYRO SENSOR

34 — CAMERA

21 — VEHICLE-POSITION ACQUIRING UNIT

22 — VOICE ACQUIRING UNIT

23 — UTTERANCE-DIRECTION DETECTING UNIT

24 — REPRODUCED-VOICE OUTPUT UNIT

25 — GAZE DETECTING UNIT

41 — SPEAKER 1

41 — SPEAKER 2

41 — SPEAKER 3

41 — SPEAKER n

EP 3 217 687 A1

EP 3 217 687 A1

# FIG. 8

15

# FIG. 9

# FIG. 10

WIRELESS COMMUNICATION DEVICE

TRANSMITTING UNIT — 11

— 10

— 20

VOICE PROCESSING DEVICE

31 — MICROPHONE 1

31 — MICROPHONE 2

31 — MICROPHONE 3

⋮

31 — MICROPHONE n

VEHICLE-POSITION ACQUIRING UNIT — 21

VOICE ACQUIRING UNIT — 22

UTTERANCE-DIRECTION DETECTING UNIT — 23

32 — GPS DEVICE

33 — GYRO SENSOR

EP 3 217 687 A1

## FIG. 11

WIRELESS COMMUNICATION DEVICE

RECEIVING UNIT ~12

~10

VOICE PROCESSING DEVICE ~20

32~ GPS DEVICE

33~ GYRO SENSOR

VEHICLE-POSITION ACQUIRING UNIT ~21

REPRODUCED-VOICE OUTPUT UNIT ~24

SPEAKER 1 ~41

SPEAKER 2 ~41

SPEAKER 3 ~41

SPEAKER n ~41

EP 3 217 687 A1

## INTERNATIONAL SEARCH REPORT

| International application No. |
|---|
| PCT/JP2015/076828 |

A. CLASSIFICATION OF SUBJECT MATTER
*H04R3/12*(2006.01)i, *H04R1/40*(2006.01)i, *H04R3/00*(2006.01)i, *B60R11/02*
(2006.01)n

According to International Patent Classification (IPC) or to both national classification and IPC

B. FIELDS SEARCHED

Minimum documentation searched (classification system followed by classification symbols)
H04R3/12, H04R1/40, H04R3/00, B60R11/02

Documentation searched other than minimum documentation to the extent that such documents are included in the fields searched
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2013-152524 A (Denso Corp.), 08 August 2013 (08.08.2013), paragraphs [0024] to [0026] & US 2013/0191132 A1 paragraphs [0040] to [0042] | 1-7 |
| A | JP 2007-26017 A (Nissan Motor Co., Ltd.), 01 February 2007 (01.02.2007), paragraph [0034] (Family: none) | 1-7 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 December 2015 (08.12.15) | 22 December 2015 (22.12.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009023486 A